(19) Europäisches Patentamt / European Patent Office / Office européen des brevets

(11) **EP 2 361 422 B1**

(12) **FASCICULE DE BREVET EUROPEEN**

(45) Date de publication et mention de la délivrance du brevet:
**18.05.2016 Bulletin 2016/20**

(51) Int Cl.:
***G06T 7/40*** *(2006.01)*     ***G06T 7/00*** *(2006.01)*

(21) Numéro de dépôt: **09755918.1**

(22) Date de dépôt: **23.11.2009**

(86) Numéro de dépôt international:
**PCT/EP2009/065617**

(87) Numéro de publication internationale:
**WO 2010/066561 (17.06.2010 Gazette 2010/24)**

(54) **PROCÉDÉ DE TRAITEMENT D'IMAGE POUR L'ESTIMATION D'UN RISQUE DE RUPTURE DE PLAQUE D'ATHÉROME**

BILDVERARBEITUNGSVERFAHREN ZUM SCHÄTZEN EINES RISIKOS VON ATHEROM-PLAQUE-BRUCH

IMAGE PROCESSING METHOD FOR ESTIMATING A RISK OF ATHEROMA PLAQUE BREAKAGE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **21.11.2008 FR 0857929**

(43) Date de publication de la demande:
**31.08.2011 Bulletin 2011/35**

(73) Titulaires:
• **Université Grenoble Alpes**
**38400 Saint-Martin-d'Hères (FR)**
• **CENTRE NATIONAL DE LA RECHERCHE SCIENTIFIQUE -CNRS-**
**75016 Paris (FR)**

(72) Inventeurs:
• **OHAYON, Jacques**
**F-73100 Tresserve (FR)**
• **LE FLOC'H, Simon**
**F-38000 Grenoble (FR)**
• **FINET, Gérard**
**F-69660 Collonges au Mont d'Or (FR)**
• **TRACQUI, Philippe**
**F-38240 Meylan (FR)**

(74) Mandataire: **Regimbeau**
**139, rue Vendôme**
**69477 Lyon Cedex 06 (FR)**

(56) Documents cités:
**US-B1- 6 270 459**

• **JACQUES OHAYON, OLIVIER DUBREUIL, PHILIPPE TRACQUI, SIMON LE FLOC'H, GILLES RIOUFOL, LARA CHALABREYSSE, FRANÇOISE THIVOLET, ETAL.: "influence of residual stress / strain on the biomechanical stability of vulnerable coronary plaques: potential impact for evaluating the risk of plaque rupture" AM J PHYSIOL HEART CIRC PHYSIOL, no. 293, 29 juin 2007 (2007-06-29), pages 1987-1996, XP002533071 DOI: 10.1152/ajpheart.00018.2007**
• **M. -L. ZHANG, M. S. MIAO. A. PEETERS, C. VAN ALSENOY, J. J. LADIK AND V. E. VAN DOREN: "LDA calculations of the Young's moduli of polyehylene and six polyfluoroethylenes" SOLID STATE COMMUNICATIONS, vol. 116, no. 6, 21 septembre 2000 (2000-09-21), pages 339-343, XP002533072 DOI: 10.1016/s0038-1098(00)00313-6**
• **OYSU C ET AL: 'Coupled FEM-BEM for elastoplastic contact problems using Lagrange multipliers' APPLIED MATHEMATICAL MODELLING vol. 30, no. 3, 01 Mars 2006, GUILDFORD, GB, pages 231 - 247, XP027956559 ISSN: 0307-904X**

EP 2 361 422 B1

**Description**

DOMAINE TECHNIQUE DE L'INVENTION

La présente invention concerne le domaine technique du traitement d'image médicale. Plus particulièrement, la présente invention concerne un procédé de traitement d'image pour l'estimation d'un risque de rupture d'une plaque d'athérome.

PRESENTATION DE L'ART ANTERIEUR

Chaque année les maladies cardio-vasculaires font plus de victimes que le cancer. Angine de poitrine, infarctus du myocarde, mort subite et accidents vasculaires sont les conséquences de l'athérosclérose.

Des études histologiques ont montré qu'une plaque d'athérome vulnérable peut être définie comme un grand corps extracellulaire nécrotique 10 associé à une chape fibreuse 20 mince (i.e. inférieure à 100 $\mu$m) infiltrée par des macrophages.

Lorsqu'une artère coronaire 30 irriguant le muscle cardiaque (ou myocarde) est obstruée par un thrombus déclenché par la rupture spontanée d'une plaque d'athérome, la zone non irriguée en oxygène est lésée. Ce mécanisme est à l'origine de la mort subite, de l'angor instable ou de l'infarctus du myocarde.

Plusieurs rapports ont révélé que ces plaques vulnérables peuvent être détectées cliniquement par diverses techniques, y compris l'échographie intravasculaire (ou « IVUS » acronyme du terme anglo-saxon « *Intra-Vascular Ultra-Sound* »), la tomographie par cohérence optique (ou « OCT » acronyme anglo-saxon de *« Optical coherence Tomography »*), la tomodensitométrie et l'Imagerie par Résonance Magnétique (ou IRM).

Toutefois, les prévisions de rupture basées sur la morphologie et sur la composition de la plaque sont encore assez imprécises et souffrent de l'insuffisance d'indicateurs de risque.

Le défi actuel est que la prévision de la rupture de la plaque coronarienne requiert non seulement :

- une quantification précise de l'épaisseur de la couche fibreuse et
- de la morphologie du corps nécrotique,

mais aussi et surtout une connaissance précise de ses propriétés mécaniques, et plus spécifiquement de l'élasticité, de la paroi artérielle et des composants de la plaque.

En effet, ces données peuvent permettre une évaluation précise du pic de contrainte au niveau de la couche fibreuse, critère qui semble être un bon indicateur biomécanique du risque de rupture de la plaque.

Malheureusement, l'identification in vivo des propriétés mécaniques de la plaque est difficile en raison de son hétérogénéité et du caractère évolutif de ces propriétés mécaniques lors de la croissance de la plaque.

Plus précisément, la création d'une image d'élasticité (ou de rigidité) représentant l'élasticité du tissu vasculaire sanguin analysé, constitue un pré-requis pour un calcul fiable des répartitions des contraintes.

Le calcul de ces images d'élasticité est un défi qui a été abordé par une assez grande diversité d'approches.

En utilisant comme données les déformations de la plaque au cours du cycle cardiaque, plusieurs études ont été réalisées pour estimer des images d'élasticité vasculaire. Des approches directes ou des procédures itératives ont été proposées.

Les approches itératives se sont servies d'un algorithme d'optimisation afin de minimiser l'erreur entre les déformations mesurées et les déformations calculées grâce à un modèle numérique. Dans ce contexte, l'amélioration de la reconstruction de l'élasticité de la plaque dépend de la performance de l'algorithme d'optimisation.

Ainsi, plusieurs groupes ont développé des algorithmes d'optimalisation et de segmentations pour l'extraction des modules élastiques des composants de la plaque. Toutefois, ces méthodes ne sont pas assez efficaces et performantes pour permettre d'obtenir une image d'élasticité lorsque la plaque d'athérome comporte plusieurs corps nécrotiques voisins ce qui est souvent le cas.

Par ailleurs, ces méthodes ne sont pas performantes : 1) ni pour l'identification des composants et plus particulièrement des constituants rigides au sein de la plaque car elles ne sont pas en mesure d'extraire les inclusions de calcium, et 2) ni pour la quantification précise de l'épaisseur de la chape fibreuse, ce qui empêche donc tout diagnostic fiable de vulnérabilité de la plaque.

Ainsi de façon a diagnostiquer précisément le degré de vulnérabilité d'une plaque d'athérome, le praticien a besoin de connaître avec précision :

- l'épaisseur de la chape fibreuse,
- les dimensions des différents constituants de la plaque
- les propriétés mécaniques de tous ces constituants.

Le but de la présente invention est de permettre au praticien d'estimer de manière plus précise le degré de vulnérabilité d'une plaque d'athérome en lui fournissant non seulement, une description morphologique complète de la plaque d'athérome, mais aussi une image d'élasticité précise, notamment une image d'élasticité représentant l'élasticité des différents composants de la plaque d'athérome lorsque la plaque comporte plusieurs corps nécrotiques voisins et dans laquelle les inclusions de calcium sont prises en compte.

La présente méthode permet en outre au praticien d'obtenir avec précision les autres critères (i.e. épaisseur de la chape fibreuse et dimensions des corps nécrotiques tel que l'épaisseur de ceux-ci) lui permettant d'estimer le risque de rupture d'une plaque d'athérome.

## PRESENTATION DE L'INVENTION

A cet effet on propose un procédé de traitement d'images pour l'estimation d'un risque de rupture d'une plaque d'athérome comprenant :

- une étape de réception d'une image, dite *« élastogramme »,* représentant les déformations internes qui résultent de la compression d'un tissu vasculaire sanguin analysé en fonction de la pression sanguine,
- une étape de pré-segmentation de l'élastogramme pour obtenir une image pré-segmentée comprenant une pluralité de zones, et
- une étape de calcul d'une image d'élasticité représentant l'élasticité d'au moins une région de l'élastogramme, la région correspondant à une zone sélectionnée parmi la pluralité de zones de l'image pré-segmentée, et l'image d'élasticité permettant à l'utilisateur d'estimer le risque de rupture de plaque d'athérome, procédé dans lequel :
- d'une part la pré-segmentation est réalisée en considérant le tissu comme étant un solide élastique incompressible de manière à déterminer le gradient du module d'Young comme étant égal à la somme du gradient du multiplicateur de Lagrange et d'un vecteur dépendant de l'espace,
- et d'autre part la pré-segmentation comprend la détermination des contours de chaque zone de la pluralité de zones au moyen dudit vecteur dépendant de l'espace.

Des aspects préférés mais non limitatif de du procédé selon l'invention sont les suivants :

- les contours de chaque zone de la pluralité de zones correspondent aux valeurs maximales du vecteur dépendant de l'espace ;
- le vecteur H dépendant de l'espace est de la forme :

$$H = - [\varepsilon]^{-1} \, div \, [\varepsilon]$$

Avec : - $[\varepsilon]$ la matrice de déformation,

- $[\varepsilon]^{-1}$ l'inverse de la matrice de déformation,
- div $[\varepsilon]$ la divergence de la matrice de déformation.

- l'étape de calcul d'une image d'élasticité comprend une sous étape de segmentation par ligne de partage des eaux dans laquelle les zones sont sélectionnées successivement parmi la pluralité de zones de l'image pré-segmentée ;
- les zones sont sélectionnées successivement, de la zone de l'image pré-segmentée de plus haute intensité pour H à la zone de l'image pré-segmentée de plus basse intensité pour H ;
- l'étape de calcul de l'image d'élasticité comprend en outre une sous étape d'optimisation réalisée après la sélection de chaque nouvelle zone n+1 lors de l'étape de segmentation ;
- lors de l'étape d'optimisation, l'élasticité de la nouvelle zone n+1 sélectionnée lors de l'étape de segmentation est estimée en minimisant une erreur, dite erreur sur les déformations, entre les déformations mesurée de l'élastogramme et les déformations calculées des n+1 zones sélectionnées ;
- l'étape de calcul de l'image d'élasticité comprend une étape de comparaison de l'image d'élasticité à un critère d'arrêt de l'étape de calcul de l'image d'élasticité ;
- le critère d'arrêt est que la différence entre deux erreurs sur les déformations calculées lors de deux étapes successives caractérisant les élasticités des n et n+1 zones est supérieure à $10^{-7}$ ;
- le critère d'arrêt est que le nombre de zones sélectionnées est supérieur à 10.

L'invention concerne également un système de traitement d'images pour l'estimation d'un risque de rupture

EP 2 361 422 B1

de plaque d'athérome, caractérisé en ce qu'il comprend des moyens pour la mise en oeuvre du procédé décrit ci-dessus.

L'invention concerne également un produit programme d'ordinateur comprenant des instructions de code programme enregistré sur un support utilisable dans un ordinateur, caractérisé en ce qu'il comprend des instructions pour la mise en oeuvre du procédé décrit ci-dessus.

PRESENTATION DES FIGURES

L'invention sera mieux comprise en référence aux figures qui suivent et qui sont purement illustratives et non limitatives et sur lesquelles :

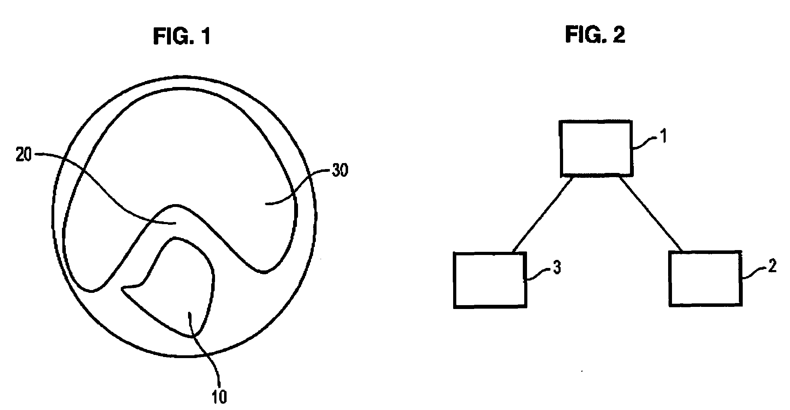

- la figure 1 illustre schématiquement une plaque d'athérome,
- la figure 2 illustre un mode de réalisation d'un système de traitement d'images pour l'estimation d'un risque de rupture de plaque d'athérome,
- la figure 3 illustre un mode de réalisation du procédé de traitement d'images pour l'estimation d'un risque de rupture de plaque d'athérome.

PRESENTATION DETAILLEE DE L'INVENTION

On va maintenant décrire plus en détail le procédé selon l'invention.

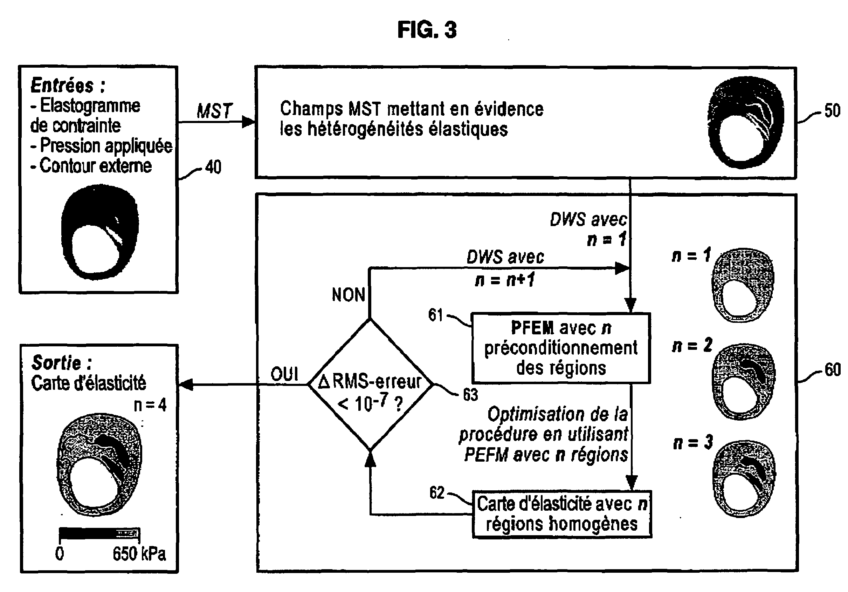

Comme illustré à la figure 3, le procédé de traitement d'images pour l'estimation d'un risque de rupture d'une plaque d'athérome comprend :

- une étape de réception 40 d'une image, dite *« élastogramme »*, représentant les déformations internes qui résultent de la compression d'un tissu vasculaire sanguin analysé en fonction de la pression sanguine,
- une étape de pré-segmentation 50 de l'élastogramme pour obtenir une image pré-segmentée comprenant une pluralité de zones, et
- une étape de calcul d'une image d'élasticité 60 représentant l'élasticité d'au moins une région de l'élastogramme, la région correspondant à une zone sélectionnée parmi la pluralité de zones de l'image pré-segmentée, et l'image d'élasticité permettant à l'utilisateur d'estimer le risque de rupture de plaque d'athérome,

Comme on le verra plus en détail dans la suite, ce procédé est remarquable en ce que :

- d'une part la pré-segmentation est réalisée en considérant le tissu comme étant un solide élastique incompressible de manière à déterminer le gradient du module d'Young comme étant égal à la somme du gradient du multiplicateur de Lagrange et d'un vecteur dépendant de l'espace H,
- et d'autre part la pré-segmentation comprend la détermination des contours de chaque zone de la pluralité de zones au moyen dudit vecteur dépendant de l'espace.

Le lecteur appréciera que le gradient multiplicateur de Lagrange - dont il est fait mention ci-dessus - est issu de la condition d'incompressibilité du milieu.

L'élastogramme est obtenu par toute méthode connue de l'homme du métier. Par exemple, l'élastogramme peut être obtenu de la façon suivante. Une sonde ultrasonore est introduite dans l'artère du patient au niveau de la portion d'artère que l'on souhaite analyser. Une séquence d'images ultrasonores de l'artère est acquise pendant que le tissu artériel se comprime/dilate sous l'effet de la pulsation cardiaque. L'élastogramme ou image de la distribution des déformations est estimée en étudiant la cinétique de la séquence temporelle d'images ultrasonores.

L'étape de pré-segmentation 50 permet l'obtention d'une image comprenant une pluralité de zones délimitées par leur contour. Les contours de chaque zone de la pluralité de zones correspondent aux valeurs maximales du vecteur dépendant de l'espace H.

L'étape de calcul de l'image d'élasticité 60 est ensuite mise en oeuvre sur l'image obtenue à l'issue de l'étape de pré-segmentation. Cette étape de calcul de l'image d'élasticité comprend plusieurs sous étape.

Tout d'abord, une sous étape de segmentation par ligne de partage des eaux 61 est implémentée. Dans cette étape, les zones sont sélectionnées successivement parmi la pluralité de zones de l'image pré-segmentée. Les zones sont sélectionnées une à une, de la zone de l'image pré-segmentée de plus haute intensité pour H à la zone de l'image pré-segmentée de plus basse intensité pour H. Plus précisément, on commence par sélectionner la zone de l'image dont la valeur du contour est la plus importante parmi l'ensemble des valeurs de contour de l'image. On applique à cette zone les sous étape décrites ci-après. Puis, on sélectionne une autre zone de l'image pré-segmentée. Cette autre zone correspondant à la zone dont la valeur du contour est la plus importante parmi les zones restantes non traitées de l'image, et ainsi de suite. Si deux zones présentent la même valeur de contour, on sélectionnera la zone à traiter en

4

premier en fonction d'un autre critère comme par exemple la taille de la zone ou tout autre critère connu de l'homme du métier.

Ensuite, une sous étape d'optimisation 62 est implémentée. Pour chaque nouvelle zone sélectionnée, on estime son élasticité. L'élasticité de la nouvelle zone sélectionnée est estimée en minimisant une erreur, dite erreur sur les déformations, entre les déformations mesurées de l'élastogramme et les déformations calculées de l'ensemble des zones sélectionnées.

Plus précisément, supposons que n zones ont déjà été sélectionnées et que les élasticités de ces n zones ont déjà été estimées.

On sélectionne une nouvelle zone n+1 à la sous étape 61 précédente. Les élasticités des n premières zones ont déjà été calculées et on cherche à déterminer l'élasticité de la nouvelle zone sélectionnée n+1.

On assigne à cette nouvelle zone sélectionnée n+1 une valeur d'élasticité, par exemple égale à un. On calcul le champ de déformation des n+1 zones sélectionnées, avec cette valeur d'élasticité assignée égale à un pour la zone n+1.

On calcule ensuite l'erreur de déformation entre le champ de déformation mesuré issu de l'élastogramme et le champ de déformation calculé des n+1 zones sélectionnées, avec cette valeur d'élasticité assignée égale à un pour la zone n+1.

On assigne ensuite à la zone n+1 une valeur d'élasticité égale à deux et on réitère les étapes de calcule du champ de déformation et de l'erreur de déformation pour cette valeur d'élasticité assignée égale à deux pour la zone n+1, et ainsi de suite.

On retient ensuite pour la zone n+1 sélectionnée la valeur d'élasticité qui permet de minimiser l'erreur sur les déformations.

Bien entendu, l'estimation de l'élasticité de chaque nouvelle région sélectionnée n+1 n'est pas faite en assignant des valeurs d'élasticité de manière empirique ; cette estimation peut être réalisée en utilisant par exemple un processus itératif ou récursif de recherche tel qu'une dichotomie.

Après avoir estimé l'élasticité de la nouvelle zone n+1, on effectue un test 63 pour déterminer si la sélection d'une autre zone n+2 est nécessaire ou non.

Deux critères d'arrêt peuvent être retenus.

Le premier est fonction du nombre de zones sélectionnées. Si le nombre de zones sélectionnées est supérieur à 10, alors on arrête le procédé et aucune autre zone de l'image pré-segmentée n'est sélectionnée.

Le deuxième est fonction de la variation de l'erreur sur les déformations entre deux sélections de zones successives. Après l'estimation de l'élasticité de chaque nouvelle zone n+1, l'erreur sur les déformations obtenue pour les n+1 zones est comparée à l'erreur sur les déformations obtenue pour les n premières zones. Si l'écart entre ces deux erreurs sur les déformations calculées lors de deux sous étapes successives (de sélection de zone et d'estimation de l'élasticité de la zone sélectionnée) est inférieur ou égal à $10^{-7}$ alors on arrête le procédé et aucune autre zone de l'image pré-segmentée n'est sélectionnée.

On obtient alors une image d'élasticité d'une pluralité de zones sélectionnées comme décrits précédemment.

Certaines de ces zones peuvent ensuite être fusionnées en fonction de différents critères tels que le recouvrement des zones par exemple, leur forme ou leur valeur d'élasticité.

On obtient alors une image d'élasticité représentant l'élasticité des moins une région d'intérêt retenues de l'élastogramme, chaque région correspondant à une zone sélectionnée parmi la pluralité de zones de l'image pré-segmentée. Cette image d'élasticité permet à l'utilisateur d'estimer le risque de rupture de plaque d'athérome. En effet, cette image indique à l'utilisateur :

- l'épaisseur de la chape fibreuse (qui peut être mesurée aisément en utilisant un système de curseurs que positionne l'utilisateur par exemple),
- les dimensions des différentes régions retenues de la plaque (qui peuvent être calculées pour chaque région en utilisant des méthodes connues de l'homme du métier),
- les propriétés mécaniques de toutes ces régions puisque l'élasticité de chacune de ces région a été estimée grâce au procédé selon l'invention.

Le procédé décrit ci-dessus peut être mis en oeuvre sur un système de traitement d'images pour l'estimation d'un risque de rupture de plaque d'athérome tel qu'illustré à la figure 3. Ce système comprend des moyens de saisie 1, des moyens de traitement 2, et des moyens d'affichage 3. Les moyens de saisie 1 permettent la saisie de données par un utilisateur. Ces moyens de saisie 1 comprennent par exemple un clavier et/ou une souris d'ordinateur. Les moyens de traitement 2 permettent le traitement des images radiologiques. Ces moyens de traitement 2 comprennent par exemple une unité centrale d'un ordinateur. Les moyens d'affichage 3 permettent notamment l'affichage des images traitées par les moyens de traitement.

On va maintenant décrire plus en détail des aspects théoriques relatifs au procédé et au système selon l'invention.

### Principe général

La présente étude théorique a été conçue pour déterminer le modulogramme complexe de plaque d'athérome grâce notamment à une étape de pré-segmentation des données d'entrée et à une nouvelle approche combinant une segmentation par ligne de partage des eaux à une procédure d'optimisation permettant d'extraire la morphologie et le module d'Young des composants de la plaque d'athérome.

Une approche combinée basée sur la théorie de la mécanique continue a été appliquée avec succès à une lésion coronaire de patient imagée *in vivo* en utilisant un échographe intravasculaire (IVUS).

La robustesse et la performance du procédé selon l'invention ont été étudiées vis-à-vis de divers facteurs susceptibles d'affecter l'estimation de la vulnérabilité de la plaque d'athérome.

La figure 3 représente les différentes étapes du procédé selon l'invention basée sur un modèle d'éléments finis par métrique (PFEM abréviation de l'expression anglo-saxonne *« Parametric Finite Element Model »*).

Dans une première étape, en utilisant une approche par gradient d'élasticité obtenue en étendant le modèle théorique proposé par Sumi et al, un critère permettant de mettre en évidence les hétérogénéités de la plaque d'athérome est obtenu.

Plus particulièrement, ce critère permet de mettre en évidence les hétérogénéités de la plaque d'athérome à partir du champ de déformation radiale. Cette étape mathématique de pré-conditionnement des données sera appelée dans la suite *« transformée modifiée de Sumi »* (MST abréviation de l'expression anglo-saxonne « *Modified Sumi's Transform »*).

Cette étape de pré-conditionnement mathématique permet d'établir une image de la dérivée spatiale du module d'Young.

Ensuite, une étape de segmentation des données par ligne de partage des eaux (DWS abréviation de l'expression anglo-saxonne « *Dynamic Water Shed Segmentation* ») est appliquée aux données obtenues à l'étape précédente de pré-conditionnement pour obtenir une image d'élasticité.

### Etape de détection de contours basée sur la théorie de mécaniques continue

### Transformé de Skorovoda

Skovoroda et al ont proposé un critère mathématique pour extraire les contours d'inclusions à partir du champ de déformation d'intraplaques et connaissant l'équation de continuité de contrainte locale à l'interface entre les inclusions et le milieu environnant avec les modules d'Young $E_{int}$ et $E_{ext}$ respectivement.

La détection de chaque point de contour était obtenue en estimant le rapport :

-   des composantes de déformation radiale interne $\varepsilon_{ij}{}^{int}$ sur
-   les composantes de déformation radiale externe $\varepsilon_{ij}{}^{ext}$

le long d'une direction arbitraire et dans une région infinitésimale.

Ainsi, la position des rapports maximaux permettait de mettre en évidence les contours d'inclusion. L'expression mathématique simplifiée de leurs critères - obtenue en considérant que le matériau est incompressible et en ne prenant en compte que la composante radiale du tenseur de contrainte $\varepsilon_{rr}$ - est donnée par :

$$\frac{E^{ext}}{E^{int}} = \frac{\varepsilon_{rr}^{int}}{\varepsilon_{rr}^{ext}}$$

Ce critère a été utilisé pour évaluer les améliorations fournies par le procédé selon l'invention.

### Transformé modifié de Sumi

En supposant que les propriétés mécaniques varient de manière continue dans l'espace et en écrivant l'équation d'équilibre local pour un milieu incompressible isotropique sollicité selon une condition de contrainte plane, Sumi a trouvé une relation entre le vecteur gradient du module d'Young et les composants du tenseur de contrainte. Ce critère a été utilisé avec succès pour reconstituer une image de rigidité dans le cas d'une hétérogénéité circulaire immergée dans un milieu continuum.

Cependant, on notera que la condition de contrainte plane n'est pas pertinente pour modéliser une déformation des vaisseaux sanguins.

Il est donc nécessaire d'étendre cette approche à des milieux élastiques incompressibles contraints selon des conditions de déformation plane. En considérant que la plaque d'athérome est incompressible, l'expression du gradient du module d'Young a été déduite de la manière suivante.

En supposant une élasticité linéaire, le milieu hétérogène est décrit par la loi de HOOKE :

$$[\sigma] = -p\,[I] + \frac{2}{3}\,E(\bar{x})\,[\varepsilon]$$

Dans laquelle :

 o [$\sigma$] et [$\varepsilon$] sont les tenseurs de contrainte et de déformation,
 o [I] est la matrice identité,
 o E est le module d'Young qui est une production arbitraire de la position du vecteur x, et
 o p est le multiplicateur de lagrange résultant de l'incompressibilité du matériau donné dans la contrainte cinématique suivante :

$$\text{Trace.}[\varepsilon] = 0$$

En négligeant la gravité et les forces inertielles, le tenseur de contrainte [$\sigma$] satisfait l'équation d'équilibre local :

$$\nabla.[\sigma] = \vec{0}$$

En substituant les équations 2 et 3 dans l'équation 4, on obtient la relation suivante du gradient du module d'Young :

$$\frac{\nabla E}{E} = \frac{3}{2}\,[\varepsilon]^{-1}\,\frac{\nabla p}{E} - [\varepsilon]^{-1}\,\nabla.[\varepsilon]$$

Puisque le gradient lagrangien ne peut être mesuré expérimentalement, on s'intéresse plus particulièrement au second terme de la relation ci-dessus en considérant que pour l'étape de pré-segmentation, ce second terme peut être utilisé en tant que critère permettant la détermination de la position des contours des inclusions.

Par conséquent, on introduit un vecteur dépendant de l'espace H correspondant au deuxième terme de l'équation ci-dessus étant définie telle que :

$$\vec{H} = -[\varepsilon]^{-1}\,\nabla.[\varepsilon]$$

Dans lequel H est un vecteur dépendant de l'espace. Le succès de la reconstruction d'une image des contours d'inclusions valide a posteriori la pertinence de l'approche selon l'invention.

Dans un système de coordonnées polaires bidimensionnelles (2D) les composantes du vecteur dépendant de l'espace H peuvent s'exprimer sous la forme :

$$H_r = -\frac{1}{\varepsilon_{rr}^2 + \varepsilon_{r\vartheta}^2}\left\{\varepsilon_{rr}\left(\frac{\partial\varepsilon_{rr}}{\partial r} + \frac{1}{r}\frac{\partial\varepsilon_{r\vartheta}}{\partial\theta} + \frac{2\varepsilon_{rr}}{r}\right) + \varepsilon_{r\vartheta}\left(\frac{\partial\varepsilon_{r\vartheta}}{\partial r} - \frac{1}{r}\frac{\partial\varepsilon_{rr}}{\partial\theta} + \frac{2\varepsilon_{r\vartheta}}{r}\right)\right\}$$

$$H_s = -\frac{1}{\varepsilon_{rr}^2 + \varepsilon_{r\theta}^2}\left\{\varepsilon_{r\theta}\left(\frac{\partial\varepsilon_{rr}}{\partial r} + \frac{1}{r}\frac{\partial\varepsilon_{r\theta}}{\partial\theta} + \frac{2\varepsilon_{rr}}{r}\right) - \varepsilon_{rr}\left(\frac{\partial\varepsilon_{r\theta}}{\partial r} - \frac{1}{r}\frac{\partial\varepsilon_{rr}}{\partial\theta} + \frac{2\varepsilon_{r\theta}}{r}\right)\right\}$$

Dans lequel $\varepsilon_{\eta\theta}$ et $\varepsilon_{r\theta}$ sont les composantes tangentielles et de cisaillement du tenseur de contrainte.

Afin de définir un critère qui dépend de la variation relative du module d'Young local, on introduit la projection dW du vecteur H sur le vecteur de position élémentaire dx tel que :

$$dW = \vec{\overline{H}} . d\vec{x}$$

En effet, en utilisant les équations 5, 6 et 8 dW peut être exprimé de manière avantageuse comme suit :

$$dW = \left(\frac{\nabla E}{E} - \frac{3}{2}\,[\varepsilon]^{-1}\,\frac{\nabla p}{E}\right).d\vec{x} = \frac{dE}{E} - \frac{3}{2}\,[\varepsilon]^{-1}\frac{\nabla p}{E}.d\vec{x}$$

Cela montre que dW dépend de la variation relative du modèle d'Young local. L'approximation de dW par dE/E sera d'autant plus précise que les composants du gradient multiplicatif lagrangien deviennent petits.

En pratique, les contraintes radiales sont l'estimateur le plus simple du tenseur de contrainte avec les techniques de l'échographie courante.

C'est pourquoi le critère décrit ci-dessus est simplifié en négligeant les contraintes de compression. Ainsi, l'expression du critère dW est maintenant donnée par l'expression suivante :

$$dW = -\frac{1}{\varepsilon_{rr}}\left(\frac{\partial\varepsilon_{rr}}{\partial r} + \frac{2\varepsilon_{rr}}{r}\right)dr - r\,\frac{1}{\varepsilon_{rr}}\,\frac{\partial\varepsilon_{rr}}{\partial\theta}\,d\theta$$

Les dérivés partiels des composantes de contrainte radiale ont été calculés en convoluant le champ de contrainte avec un masque de Sobel. Ainsi, l'amplitude de dW a été calculée en fonction de la définition ordinaire de maille polaire décrite ci-dessus pour permettre l'obtention d'une image MST. Les contours de chaque zone correspondent aux lignes où l'amplitude de dW est la plus importante. Cette étape de pré-conditionnement mathématique a été appelée transformé modifié de SUMI et a été utilisée pour mettre en évidence les hétérogénéités des plaques d'athérome.

*Reconstruction du module d'Young*

La figure 3 schématise les étapes successives du procédé selon l'invention pour identifier l'image d'élasticité du champ de contrainte radiale en utilisant le modèle d'élément fini paramétrique.

A partir du champ MST obtenu à l'étape de pré-conditionnement, une segmentation par ligne de partage des eaux dynamique (DWS) combinée à une procédure d'optimisation, a été appliquée pour obtenir une carte d'élasticité (modulogramme) sur les plaques étudiées.

A chaque itération de l'étape de segmentation par ligne de partage des eaux (i.e. pour un nombre donné d'inclusions de plaques), on suppose que chaque inclusion a une rigidité uniforme.

Le nième module d'Young a ensuite été identifié en utilisant une procédure d'optimisation du gradient qui minimise l'erreur moyenne quadratique (RMS abréviation de l'expression anglo-saxonne « *Root Mean Square* ») entre le $\varepsilon_{rr}^{meas}$ et le $\varepsilon_{rr}^{comp}$ calculés des contraintes radiales dans la plaque :

$$RMS_{plaque} - error = \sqrt{\frac{1}{N}\sum_{node,i}[\varepsilon_{rr}^{meas}(n_i) - \varepsilon_{rr}^{comp}(n_i)]^2}$$

Où N est le nombre total de noeuds dans la maille de plaque et Ni est le ième noeud de la plaque du maillage polaire.

Une contrainte a été imposée pendant l'optimisation : les modules d'Young non connus ont été classés entre 0.1 kPa et $10^4$ kPa dans cette étape une solution du jeu de modules d'Young a été trouvée acceptable lorsque la procédure de tolérance admettait un seuil inférieur à $10^{-8}$ ou que le nombre de régions était égal à 30.

Des segmentations plus fines ont été obtenues en augmentant le nombre d'inclusions dans une plaque d'athérome de manière supérieure à une valeur égale à 10.

En effet, on sait d'après des études sur la morphologie de plaque d'athérome qu'il s'agit là d'une limite supérieure réaliste.

En outre, d'un point de vue algorithmique de calcul, il a été vérifié a posteriori que cette limite supérieure n'est jamais atteinte par l'étape d'optimisation.

Le lecteur aura compris que de nombreuses modifications peuvent être apportées au procédé et au système décrit ci-dessus sans sortir matériellement des enseignements du présent document. C'est pourquoi de telles modifications sont comprises dans la portée des revendications qui suivent.

## Revendications

1. Procédé de traitement d'images pour l'estimation d'un risque de rupture d'une plaque d'athérome comprenant :

   - une étape de réception (40) d'une image, dite *« élastogramme »*, représentant les déformations internes qui résultent de la compression d'un tissu vasculaire sanguin analysé en fonction de la pression sanguine,
   - une étape de pré-segmentation (50) de l'élastogramme pour obtenir une image pré-segmentée comprenant une pluralité de zones, et
   - une étape de calcul d'une image d'élasticité (60) représentant l'élasticité d'au moins une région de l'élastogramme, la région correspondant à une zone sélectionnée parmi la pluralité de zones de l'image pré-segmentée, et l'image d'élasticité permettant à l'utilisateur d'estimer le risque de rupture de plaque d'athérome,

   **caractérisé en ce que** :

   - d'une part la pré-segmentation est réalisée en considérant le tissu comme étant un solide élastique incompressible de manière à déterminer le gradient du module d'Young comme étant égal à la somme du gradient du multiplicateur de Lagrange et d'un vecteur dépendant de l'espace, de la forme H = - $[\varepsilon]^{-1}$ div $[\varepsilon]$ avec :

     - $[\varepsilon]$ la matrice de déformation,
     - $[\varepsilon]^{-1}$ l'inverse de la matrice de déformation,
     - div $[\varepsilon]$ la divergence de la matrice de déformation

   - et d'autre part la pré-segmentation comprend la détermination des contours de chaque zone de la pluralité de zones au moyen d'un critère (dW) exprimé en fonction dudit vecteur dépendant de l'espace permettant de mettre en évidence les hétérogénéités de la plaque d'athérome en fonction du champ de déformation radiale, ledit critère étant donné par la formule dW = H.dx, où dx est un vecteur de position élémentaire.

2. Procédé selon la revendication 1, **caractérisé en ce que** les contours de chaque zone de la pluralité de zones correspondent aux valeurs maximales du vecteur dépendant de l'espace.

3. Procédé selon l'une des revendications précédentes, **caractérisé en ce que** l'étape de calcul d'une image d'élasticité (60) comprend une sous étape de segmentation par ligne de partage des eaux (61) dans laquelle les zones sont sélectionnées successivement parmi la pluralité de zones de l'image pré-segmentée.

4. Procédé selon la revendication 3, **caractérisé en ce que** les zones sont sélectionnées successivement, de la zone de l'image pré-segmentée de plus haute intensité pour H à la zone de l'image pré-segmentée de plus basse intensité pour H.

5. Procédé selon l'une des revendications 3 ou 4, **caractérisé en ce que** l'étape de calcul de l'image d'élasticité (60) comprend en outre une sous étape d'optimisation (62) réalisée après la sélection de chaque nouvelle zone n+1 lors de l'étape de segmentation.

6. Procédé selon la revendication 5, **caractérisé en ce que** lors de l'étape d'optimisation (62), l'élasticité de la nouvelle zone n+1 sélectionnée lors de l'étape de segmentation est estimée en minimisant une erreur, dite erreur sur les déformations, entre les déformations mesurée de l'élastogramme et les déformations calculées des n+1 zones sélectionnées.

7. Procédé selon l'une des revendications 3 à 6, **caractérisé en ce que** l'étape de calcul de l'image d'élasticité (60) comprend une étape de comparaison (63) de l'image d'élasticité à un critère d'arrêt de l'étape de calcul de l'image d'élasticité.

8. Procédé selon la revendication 7, **caractérisé en ce que** le critère d'arrêt est que la différence entre deux erreurs sur les déformations calculées lors de deux étapes successives caractérisant les élasticités des n et n+1 zones est inférieure à $10^{-7}$.

9. Procédé selon la revendication 7, **caractérisé en ce que** le critère d'arrêt est que le nombre de zones sélectionnées est supérieur à 10.

10. Système de traitement d'images pour l'estimation d'un risque de rupture de plaque d'athérome, **caractérisé en ce qu'**il comprend des moyens (1, 2, 3) pour la mise en oeuvre du procédé selon l'une des revendications 1 à 9.

11. Produit programme d'ordinateur comprenant des instructions de code programme enregistré sur un support utilisable dans un ordinateur, **caractérisé en ce qu'**il comprend des instructions pour la mise en oeuvre du procédé selon l'une des revendications 1 à 9.

**Patentansprüche**

1. Bildverarbeitungsverfahren zur Beurteilung eines Risikos von Atherom-Plaque-Bruch, umfassend:

   - einen Aufnahmeschritt (40) eines als "Elastogramm" bezeichneten Bilds, das interne Verformungen zeigt, die aus der Kompression eines in Abhängigkeit vom Blutdruck analysierten Blutgefäßgewebes resultieren,
   - einen Vorsegmentierungsschritt (50) des Elastogramms, um ein vorsegmentiertes Bild zu erhalten, das eine Vielzahl von Zonen umfasst, und
   - einen Berechnungsschritt eines Elastizitätsbilds (60), welches die Elastizität mindestens einer Region des Elastogramms darstellt, wobei die Region einer aus der Vielzahl von Zonen des vorsegmentierten Bild ausgewählten Zone entspricht und das Elastizitätsbild dem Benutzer erlaubt, das Risiko von Atherom-Plaque-Bruch zu beurteilen,

   **dadurch gekennzeichnet, dass**:

   - zum einen die Vorsegmentierung durchgeführt wird, indem das Gewebe als ein unkomprimierbarer fester Gummi betrachtet wird, um den Gradienten des Young-Moduls als gleich der Summe des Gradienten des Lagrange-Multiplikators und eines raumabhängigen Vektors zu bestimmen, mit der Form $H = -[\varepsilon]^{-1} \, \text{div}\, [\varepsilon]$ mit:

      - $[\varepsilon]$ als Verformungsmatrize,
      - $[\varepsilon]^{-1}$ als Kehrwert der Verformungsmatrize,
      - div $[\varepsilon]$ als Divergenz der Verformungsmatrize

   - und andererseits die Vorsegmentierung die Bestimmung der Konturen jeder Zone der Vielzahl von Zonen mittels eines Kriteriums (dW) umfasst, ausgedrückt in Abhängigkeit von dem raumabhängigen Vektor, wodurch es möglich wird, die Heterogenitäten der Atherom-Plaque in Abhängigkeit vom Feld der radialen Verformung festzustellen, wobei das Kriterium durch die Formel dW = H.dx gegeben ist, wobei dx ein elementarer Positionsvektor ist.

2. Verfahren nach Anspruch 1, **dadurch gekennzeichnet, dass** die Konturen jeder Zone der Vielzahl von Zonen den maximalen Werten des raumabhängigen Vektors entsprechen.

3. Verfahren nach einem der vorangehenden Ansprüche, **dadurch gekennzeichnet, dass** der Berechnungsschritt eines Elastizitätsbilds (60) einen Unterschritt der Segmentation gemäß Wasserscheidelinie (61) umfasst, in welchem die Zonen schrittweise aus der Vielzahl von Zonen des vorsegmentierten Bilds ausgewählt werden.

4.  Verfahren nach Anspruch 3, **dadurch gekennzeichnet, dass** die Zonen von der Zone des vorsegmentierten Bilds mit der höchsten Intensität für H zu der Zone des vorsegmentierten Bilds mit der niedrigsten Intensität für H schrittweise ausgewählt werden.

5.  Verfahren nach einem der Ansprüche 3 oder 4, **dadurch gekennzeichnet, dass** der Berechnungsschritt des Elastizitätsbilds (60) ferner einen Unterschritt der Optimierung (62) umfasst, der nach der Auswahl jeder neuen Zone n+1 während des Segmentierungsschritts durchgeführt wird.

6.  Verfahren nach Anspruch 5, **dadurch gekennzeichnet, dass** während des Optimierungsschritts (62) die Elastizität der neuen, während des Segmentierungsschritts ausgewählten Zonen n+1 durch Minimierung eines sogenannten Verformungsfehlers zwischen den vom Elastogramm gemessenen Verformungen und den berechneten Verformungen der ausgewählten n+1 Zonen beurteilt wird.

7.  Verfahren nach einem der Ansprüche 3 bis 6, **dadurch gekennzeichnet, dass** der Berechnungsschritt des Elastizitätsbilds (60) einen Vergleichsschritt (63) des Elastizitätsbilds mit einem Abbruchkriterium des Berechnungsschritts des Elastizitätsbilds umfasst.

8.  Verfahren nach Anspruch 7, **dadurch gekennzeichnet, dass** das Abbruchkriterium ist, dass die Differenz zwischen zwei Fehlern bei den bei zwei aufeinanderfolgenden Schritten berechneten Verformungen, welche die Elastizitäten der n und n+1 Zonen kennzeichnen, kleiner als $10^{-7}$ ist.

9.  Verfahren nach Anspruch 7, **dadurch gekennzeichnet, dass** das Abbruchkriterium ist, dass die Anzahl der ausgewählten Zonen größer als 10 ist.

10. Bildverarbeitungssystem für die Beurteilung eines Risikos von Atherom-Plaque-Bruch, **dadurch gekennzeichnet, dass** es Mittel (1, 2, 3) für die Umsetzung des Verfahrens nach einem der Ansprüche 1 bis 9 umfasst.

11. Rechnerprogrammprodukt, umfassend auf einem in einem Rechner verwendbaren Träger gespeicherte Programmcodebefehle, **dadurch gekennzeichnet, dass** es Befehle für die Umsetzung des Verfahrens nach einem der Ansprüche 1 bis 9 umfasst.


**Claims**

1.  An image processing method for estimating risk of rupture of an atheromatous plaque, comprising:

    - a step (40) of receiving an image called an "elastogram" depicting internal deformations resulting from compression of a blood vessel tissue analyzed as function of blood pressure,
    - a pre-segmentation step (50) of the elastogram to obtain a pre-segmented image comprising a plurality of zones, and
    - a computing step of an elasticity image (60) showing the elasticity of at least one region in the elastogram, the region corresponding to a zone selected from among the plurality of zones of the pre-segmented image, and the elasticity image enabling the user to estimate the risk of rupture of an atheromatous plaque,

    **characterized in that**:

    - on the on hand, the pre-segmentation step is performed considering the tissue to be an incompressible elastic solid so as to determine the gradient of Young's modulus as being equal to the sum of the gradient of the Lagrange multiplier and a space-dependent vector, of the form $H = - [\varepsilon]^{-1} \operatorname{div} [\varepsilon]$ where:

        - $[\varepsilon]$ is the deformation matrix,
        - $[\varepsilon]^{-1}$ the inverse of the deformation matrix,
        - $\operatorname{div} [\varepsilon]$ is the divergence of the deformation matrix

    - on the other hand, the pre-segmentation step comprises the determination of the contours of each zone of the plurality of zones by means of a criterion (dW) expressed as a function of said space-dependent vector allowing to evidence the heterogeneities of the atheromatous plaque as a function of the radial stress field, said criterion being given by the formula dew H.dx, where dx is an elementary position vector.

2. The method according to claim 1, **characterized in that** the contours of each zone of the plurality of zones correspond to the maximum values of the space-dependent vector.

3. The method according to any of the preceding claims, **characterized in that** the computing step of an elasticity image (60) comprises a sub-step of watershed segmentation (61) wherein the zones are successively selected from among the plurality of zones of the pre-segmented image.

4. The method according to claim 3, **characterized in that** the zones are successively selected from the zone of the pre-segmented image with highest intensity for H to the zone of the pre-segmented image with lowest intensity for H.

5. The method according to either of claims 3 or 4, **characterized in that** the computing step of the elasticity image (60) also comprises an optimization sub-step (62) performed after selection of each new zone n+1 at the segmentation step.

6. The method according to claim 5, **characterized in that** at the optimization step (62), the elasticity of the new zone n+1 selected at the segmentation step is estimated by minimizing an error, called a strain error, between the measured strains of the elastogram and the computed strains of the n+1 selected zones.

7. The method according to any of claims 3 to 6, **characterized in that** the computing step of the elasticity image (60) comprises a comparison step (63) of the elasticity image with a criterion for stopping the computing step of the elasticity image.

8. The method according to claim 7, **characterized in that** the stop criterion is that the difference between two strain errors computed during two successive steps characterizing the elasticities of the n and n+1 zones is less than $10^{-7}$.

9. The method according to claim 7, **characterized in that** the stop criterion is that the number of selected zones is greater than 10.

10. An image processing system for estimating risk of atheromatous plaque rupture, **characterized in that** it comprises means (1, 2, 3) for implementing the method according to any of claims 1 to 9.

11. A computer programme product comprising programme code instructions recorded on a medium which can be used on a computer, **characterized in that** it comprises instructions for implementing the method according to any of claims 1 to 9.

**FIG. 2**

**FIG. 1**

**FIG. 3**

Entrées :
- Elastogramme de contrainte
- Pression appliquée
- Contour externe

40

MST

Champs MST mettant en évidence les hétérogénéités élastiques

50

60

DWS avec n = 1

DWS avec n = n+1

PFEM avec n préconditionnement des régions

61

NON

ΔRMS-erreur < 10⁻⁷ ?

63

Optimisation de la procédure en utilisant PEFM avec n régions

Carte d'élasticité avec n régions homogènes

62

n = 1

n = 2

n = 3

OUI

Sortie :
Carte d'élasticité

n = 4

0          650 kPa